# EUROPEAN PATENT APPLICATION

(11) **EP 4 583 291 A1**
(43) Date of publication of application: **09.07.2025**
(21) Application number: 23859009.5
(22) Date of filing: 29.07.2023
(51) Int. Cl.: H01M 50/35, H01M 50/24, H01M 50/244, H01M 50/204

(54) **THERMAL RUNAWAY FLUE GAS TREATMENT SYSTEM OF BATTERY PACK AND BATTERY PACK**

(30) Priority: 01.09.2022 CN 202222320408 U
(71) Applicant: D-Aus Energy Storage Technology (Xi'an) Co., Ltd, Xi' An, Shaanxi 710075 (CN)
(72) Inventor: ZHANG, Sanxue, Shaanxi 710075 (CN); LEI, Zhengjun, Shaanxi 710075 (CN); HAN, Xiaoyu, Shaanxi 710075 (CN)
(74) Representative: Berggren Oy
(86) International application number: PCT/CN2023/110061
(87) International publication number: WO 2024/045974

(57) **Abstract**

Provided are a battery pack thermal runaway flue gas treatment system and a battery pack, which mainly solve the problem of the high cost of an existing battery thermal runaway flue gas treatment method. The battery pack thermal runaway flue gas treatment system comprises a thermal runaway flue gas treatment assembly, wherein the thermal runaway flue gas treatment assembly comprises a pressure relief pipe and an exhaust pipe; one end of the pressure relief pipe communicates with an explosion vent of a battery, and the other end of the pressure relief pipe is connected with the exhaust pipe; one end of the exhaust pipe that is disposed within a box body is connected with the pressure relief pipe, and the other end of the exhaust pipe is disposed at a top end of the box body by passing through the box body; and a height of the exhaust pipe disposed outside the box body is H. Each component of the system has a simple structure, and the cost of the system is very low. Furthermore, the exhaust pipe is disposed at the top end of the box body by passing through the box body, such that a safe distance is formed between battery thermal runaway flue gas and the battery, causing the discharged thermal runaway flue gas to not affect the battery.

## Description

### Technical Field

The present invention relates to the field of batteries, and particularly relates to a battery pack thermal runaway flue gas treatment system and a battery pack.

### Background

In recent years, with the further development of the field of lithium-ion battery energy storage, the safe use of lithium-ion batteries has also received attention. Due to the principle and structural characteristics of the lithium-ion batteries, a large amount of heat generally produces due to internal resistance heating during repeated use, and the heat gradually increases. If the accumulated heat is not effectively dissipated, the temperature will further rise. When the temperature reaches a limit, the thermal balance of the battery is disrupted, triggering a series of self-heating side reactions, producing a large amount of combustible gas, leading to the phenomenon of "thermal runaway", thus finally leading to internal fire of the battery, and in serious cases, causing an explosion, resulting in potential safety hazards.

Disclosed in the Chinese Patent Application No. CN 215496894 U are a battery box for suppressing battery thermal runaway, and a battery pack and a vehicle. The battery box comprises a box body, a mounting cavity configured to mount battery modules is disposed within the box body, a plurality of crossbeams configured to separate the battery modules are provided in the mounting cavity, and fire-proof pads are disposed on side faces of the crossbeams. The battery box may block heat transfer between side plates of the modules, such that the spreading of thermal runaway between the battery modules is effectively inhibited. However, the device cannot treat thermal runaway flue gas that has been subjected to thermal runaway.

Disclosed in the Chinese Patent Application No. CN 113764815 A is an energy storage battery safety system. This invention provides an energy storage battery safety system. The energy storage battery safety system comprises a plurality of battery cells, a safe discharging portion, an insulating fluid box, a filtration adsorption device, and a gas collection box or an emptying tower. Each battery cell is provided with and comprises an explosion-proof pressure relief portion. When the battery cell produces a large amount of gas due to an internal fault, the gas is discharged by breaking through an explosion-proof film, thereby avoiding combustion and explosion inside the battery. The discharged combustible gas enters the safe discharging portion via a discharging port. Since the safe discharging portion is in an anaerobic or hypoxic state, the combustion and explosion caused by a rapid contact between the high-temperature combustible gas and oxygen may be effectively prevented. The combustible gas then passes through the insulating fluid box and the filtration adsorption device to remove harmful gas, and then the gas is collected by the gas collection box or is discharged via the emptying tower after a gas discharging requirement is met. With the battery safety system of this invention, the combustion and explosion of the energy storage batteries may be avoided, thereby ensuring the safe operation of the entire battery system.

The above battery safety system may treat the thermal runaway flue gas of the battery. However, the system comprises a plurality of components such as the safe discharging portion, the insulating fluid box, the filtration adsorption device, and the gas collection box or the emptying tower, or the like, leading to the increased cost of the battery thermal runaway treatment.

### Summary

In order to solve the problem of the high cost of an existing battery thermal runaway flue gas treatment method, some embodiments of the present invention provide a battery pack thermal runaway flue gas treatment system and a battery pack.

Some embodiments of the technical solutions of the present invention are as follows:
A battery pack thermal runaway flue gas treatment system includes a thermal runaway flue gas treatment assembly. A battery pack is disposed within a box body, and includes at least one battery. The thermal runaway flue gas treatment assembly includes an exhaust pipe and at least one pressure relief pipe. One end of each pressure relief pipe of the least one pressure relief pipe communicates with an explosion vent of the battery, and the other end of the each pressure relief pipe is connected with the exhaust pipe. One end of the exhaust pipe that is disposed within a box body is connected with the each pressure relief pipe, and the other end of the exhaust pipe is disposed at a top end of the box body by passing through the box body. A height of the exhaust pipe disposed outside the box body is H, H being greater than or equal to 3 m.

In an embodiment mode, the height H of the exhaust pipe outside the box body is greater than 9 m.

In an embodiment mode, the height H of the exhaust pipe outside the box body is greater than 12 m.

In an embodiment mode, an exhaust fan is disposed within the exhaust pipe and is configured to rapidly discharge thermal runaway flue gas, or the exhaust fan extends to a top end of the exhaust pipe and is configured to blow away the discharged thermal runaway flue gas.

In an embodiment mode, a rain cover is disposed at a top end of the exhaust pipe, and is configured to prevent rainwater from entering the exhaust pipe.

In an embodiment mode, a non-return valve is disposed on the exhaust pipe, and is configured to prevent rainwater from entering the battery through the exhaust pipe.

In an embodiment mode, an ignition device is disposed at a top end of the exhaust pipe and is configured to ignite thermal runaway flue gas discharged from the exhaust pipe, and a flame arrester is disposed on the exhaust pipe.

In an embodiment mode, a reflux device is disposed at a bottom end of the exhaust pipe, and is configured to collect electrolyte from thermal runaway flue gas.

In an embodiment mode, a mounting height of the reflux device is lower than a mounting height of the each pressure relief pipe.

At the same time, the present invention further provides a battery pack, including a battery pack and the battery pack thermal runaway flue gas treatment system described above.

Compared with the prior art, the technical solutions of the present invention have the following advantages:
The battery pack thermal runaway flue gas treatment system of the present invention includes the thermal runaway flue gas treatment assembly. The thermal runaway flue gas treatment assembly includes the pressure relief pipe and the exhaust pipe. One end of the pressure relief pipe communicates with the explosion vent of the battery, and the other end of the pressure relief pipe is connected with the exhaust pipe. One end of the exhaust pipe that is disposed within the box body is connected with the pressure relief pipe, and the other end of the exhaust pipe is disposed at the top end of the box body by passing through the box body. The height of the exhaust pipe disposed outside the box body is H, H being greater than or equal to 3 m. Each component of the system has a simple structure, and the cost of the system is very low.

At the same time, the exhaust pipe is disposed at the top end of the box body by passing through the box body, such that a safe distance formed between battery thermal runaway flue gas and the battery is at least 3 m, causing the discharged thermal runaway flue gas to not affect the battery. Furthermore, by placing the battery in the box body, the box body may achieve the effect of protection and isolation from the outside. If the battery is subjected to thermal runaway, a high-temperature gas may be discharged through the pressure relief pipe and the exhaust pipe, thereby avoiding dangers caused by accumulation of the high-temperature and high-pressure gas in a limited space.

Other advantages, objectives, and features of the present invention will be partially embodied through the following description and will also be partially understood by those skilled in the art through the study and practice of the present invention.

### Brief Description of the Drawings

The drawings to be used in description of embodiments or the prior art will be briefly introduced below in order to illustrate the technical solutions in the embodiments of the present invention or the prior art more clearly. Apparently, the drawings described below are only some embodiments of the present invention. Those of ordinary skill in the art may obtain other drawings according to these drawings without creative work.
FIG. 1 is a schematic diagram of a battery pack thermal runaway flue gas treatment system in Embodiment 1 of the present invention;
FIG. 2 is a schematic diagram of a battery pack thermal runaway flue gas treatment system in Embodiment 2 of the present invention;
FIG. 3 is a schematic diagram of a battery pack thermal runaway flue gas treatment system in Embodiment 3 of the present invention; and
FIG. 4 is a schematic diagram of a battery pack thermal runaway flue gas treatment system in Embodiment 4 of the present invention.

Reference numerals: 1-Battery, 2-Box body, 3-Pressure relief pipe, 4-Exhaust pipe, 5-Exhaust fan, 6-Rain cover, 7-Non-return valve, 8-Ignition device, 9-Reflux device, and 10-Flame arrester.

### Detailed Description of the Embodiments

The present invention is described below in detail with reference to the drawings and specific embodiments. It should be understood by those skilled in the art that these embodiments are used only to explain the technical principles of the present invention and are not intended to limit the scope of protection of the present invention.

A battery pack thermal runaway flue gas treatment system provided in the present invention includes a thermal runaway flue gas treatment assembly. A battery pack is disposed within a box body, and includes at least one battery. The thermal runaway flue gas treatment assembly includes an exhaust pipe and at least one pressure relief pipe. One end of the pressure relief pipe communicates with an explosion vent of the battery, and the other end of the pressure relief pipe is connected with the exhaust pipe. One end of the exhaust pipe that is disposed within the box body is connected with the pressure relief pipe, and the other end of the exhaust pipe passes through a top end of the box body and extends to the outer side of the top end of the box body. A height of the exhaust pipe outside the box body is greater than 3 m. The system is simple in structure, and may treat thermal runaway flue gas only by simply disposing the pressure relief pipe and the exhaust pipe. At the same time, the pressure relief pipe and the exhaust pipe may directly treat the thermal runaway flue gas, such that the thermal runaway flue gas is treated timely, thereby achieving good treatment timeliness and high treatment efficiency. The system effectively improves the safety, reliability and use durability of the battery pack, and the cost of the battery system may be effectively reduced.

In the system of the present invention, by placing the battery in the box body, the box body may achieve the effect of protection and isolation from the outside. Moreover, if the battery is subjected to thermal runaway, a high-temperature gas may be discharged through the pressure relief pipe and the exhaust pipe, so as to avoid dangers caused by accumulation of the high-temperature and high-pressure gas in a limited space, thereby improving the safety of the battery during storage and charging.

The system of the present invention has a certain requirement for the height of the exhaust pipe outside the box body, such that a safe distance is formed between battery thermal runaway flue gas and the battery, causing the discharged thermal runaway flue gas to not affect the battery. The safe distance is required to be over 3 m. Preferably, the safe distance is greater than 9 m, and optimally, the safe distance is greater than 12 m. At the same time, the distance causes the discharged thermal runaway flue gas to be rapidly taken away by airflow in an environment, thereby avoiding the accumulation of the thermal runaway flue gas.

In order to further improve the discharging timeliness of the thermal runaway flue gas, an exhaust fan may be disposed within the exhaust pipe. The exhaust fan may rapidly discharge the thermal runaway flue gas, such that the thermal runaway flue gas is discharged rapidly. Alternatively, the exhaust fan extends to a top end of the exhaust pipe. The exhaust fan is configured to blow away the discharged thermal runaway flue gas, such that the thermal runaway flue gas is rapidly discharged as well.

In order to improve the reliability of the thermal runaway flue gas treatment assembly, a rain cover may be disposed at the top end of the exhaust pipe. The rain cover prevents rainwater from entering the exhaust pipe, and thus from entering the battery. Furthermore, a non-return valve may also be disposed on the exhaust pipe, and is configured to prevent the rainwater from entering the battery through the exhaust pipe.

In order to reduce pollution of the environment, an ignition device may be disposed at the top end of the exhaust pipe, and in this case, a flame arrester is disposed on the exhaust pipe accordingly, so as to prevent downward transmission of flames. A reflux device is disposed at a bottom end of the exhaust pipe, and is configured to collect electrolyte from the thermal runaway flue gas. The position of the reflux device is lower than the position of the pressure relief pipe. The reflux device described above may specifically be a reflux drum, or the like, as long as small droplets of the electrolyte in the thermal runaway flue gas may be collected.

The present invention further includes a battery pack, including the battery pack thermal runaway flue gas treatment system described above.

### Embodiment 1

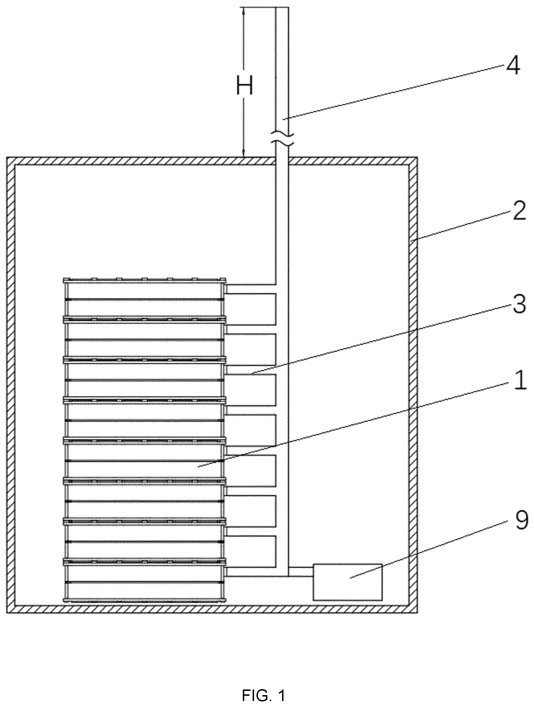

As shown in FIG. 1, a battery pack thermal runaway flue gas treatment system provided in this embodiment includes a thermal runaway flue gas treatment assembly. A battery pack is disposed within a box body 2, and includes at least N batteries 1. The thermal runaway flue gas treatment assembly includes an exhaust pipe 4 and N pressure relief pipes 3. One end of each of the N pressure relief pipes 3 correspondingly communicates with an explosion vent of each of the N batteries 1, and the other end of each of the N pressure relief pipes is connected with the exhaust pipe 4. One end of the exhaust pipe 4 that is disposed within the box body 2 is connected with the pressure relief pipes 3, and the other end of the exhaust pipe passes through a top end of the box body 2 and extends to the outer side of the top end of the box body 2. A height of the exhaust pipe 4 outside the box body 2 is greater than 3 m. A reflux device 9 is disposed at a bottom end of the exhaust pipe 4, and is configured to collect electrolyte from thermal runaway flue gas.

The system of the present invention may timely discharge a mixed combustible gas produced by thermal runaway of the battery 1 from the battery 1 through the pressure relief pipe 3 and the exhaust pipe 4. The mixed combustible gas does not build a pressure in a cavity of the battery 1, so as to prevent damage to a structure of the battery 1. The exhaust pipe 4 is disposed at the top end of the box body 2 by passing through the box body 2, such that a safe distance formed between the battery thermal runaway flue gas and the battery is at least 3 m, thereby causing the discharged thermal runaway flue gas to not affect the battery.

### Embodiment 2

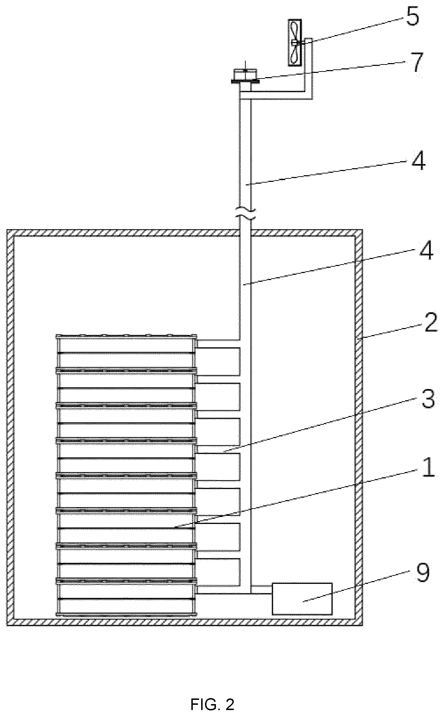

As shown in FIG. 2, a battery pack thermal runaway flue gas treatment system provided in this embodiment includes a thermal runaway flue gas treatment assembly. A battery pack is disposed within a box body 2, and includes at least one battery 1. The thermal runaway flue gas treatment assembly includes an exhaust pipe 4 and at least one pressure relief pipe 3. One end of the pressure relief pipe 3 communicates with an explosion vent of the battery 1, and the other end of the pressure relief pipe is connected with the exhaust pipe 4. One end of the exhaust pipe 4 that is disposed within the box body 2 is connected with the pressure relief pipe 3, and the other end of the exhaust pipe passes through a top end of the box body 2 and extends to the outer side of the top end of the box body 2. A height of the exhaust pipe 4 outside the box body 2 is greater than 3 m. A reflux device 9 is disposed at a bottom end of the exhaust pipe 4, and is configured to collect electrolyte from thermal runaway flue gas.

In this embodiment, the discharging timeliness of the thermal runaway flue gas may be further improved by disposing an exhaust fan 5 in the exhaust pipe 4 or at a top end of the exhaust pipe 4. If the exhaust fan 5 is disposed within the exhaust pipe 4, the exhaust fan 5 may rapidly discharge the thermal runaway flue gas, such that the thermal runaway flue gas is discharged rapidly. Alternatively, the exhaust fan 5 is disposed at the top end of the exhaust pipe 4. The exhaust fan 5 is configured to blow away the discharged thermal runaway flue gas, such that the thermal runaway flue gas is rapidly discharged as well.

### Embodiment 3

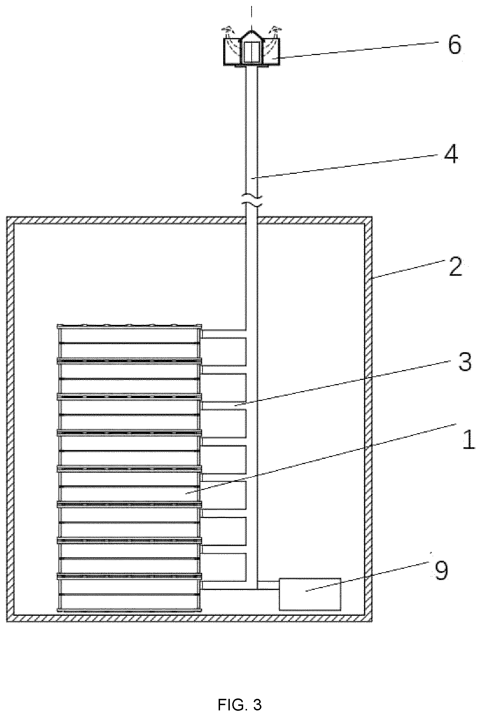

As shown in FIG. 3, a battery pack thermal runaway flue gas treatment system provided in this embodiment includes a thermal runaway flue gas treatment assembly. A battery pack is disposed within a box body 2, and includes at least one battery 1. The thermal runaway flue gas treatment assembly includes an exhaust pipe 4 and at least one pressure relief pipe 3. One end of the pressure relief pipe 3 communicates with an explosion vent of the battery 1, and the other end of the pressure relief pipe is connected with the exhaust pipe 4. One end of the exhaust pipe 4 that is disposed within the box body 2 is connected with the pressure relief pipe 3, and the other end of the exhaust pipe passes through a top end of the box body 2 and extends to the outer side of the top end of the box body 2. A height of the exhaust pipe 4 outside the box body 2 is greater than 3 m. A reflux device 9 is disposed at a bottom end of the exhaust pipe 4, and is configured to collect electrolyte from thermal runaway flue gas.

In order to improve the reliability of the exhaust pipe 4, a rain cover 6 may be disposed at the top end of the exhaust pipe 4. The rain cover 6 prevents rainwater from entering the exhaust pipe 4, and thus prevents the rainwater from entering the battery 1. Furthermore, a non-return valve 7 may also be disposed on the exhaust pipe 4, and is configured to prevent the rainwater from entering the battery 1 through the exhaust pipe 4.

### Embodiment 4

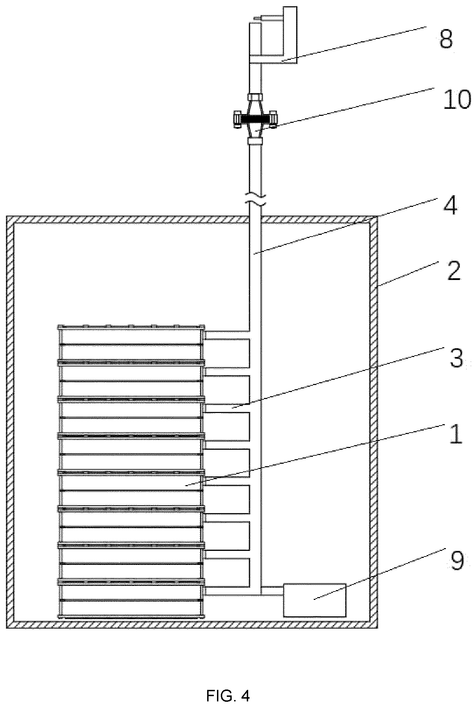

As shown in FIG. 4, a battery pack thermal runaway flue gas treatment system provided in this embodiment includes a thermal runaway flue gas treatment assembly. A battery pack is disposed within a box body 2, and includes at least one battery 1. The thermal runaway flue gas treatment assembly includes an exhaust pipe 4 and at least one pressure relief pipe 3. One end of the pressure relief pipe 3 communicates with an explosion vent of the battery 1, and the other end of the pressure relief pipe is connected with the exhaust pipe 4. One end of the exhaust pipe 4 that is disposed within the box body 2 is connected with the pressure relief pipe 3, and the other end of the exhaust pipe passes through a top end of the box body 2 and extends to the outer side of the top end of the box body 2. A height of the exhaust pipe 4 outside the box body 2 is greater than 3 m.

An ignition device 8 is disposed at a top end of the exhaust pipe 4 in this embodiment. The ignition device 8 may perform an ignition treatment on thermal runaway flue gas, so as to reduce the pollution to environments. The ignition device 8 is a pulse igniter. In this case, a flame arrester 10 is disposed on the exhaust pipe 4 accordingly, so as to prevent downward transmission of flames. The flame arrester 10 may specifically be a one-way valve or a compacted screen. A reflux device 9 is disposed at a bottom end of the exhaust pipe 4, and is configured to collect electrolyte from thermal runaway flue gas.

### Embodiment 5

As shown in FIGs. 1 to 4, this embodiment provides a battery pack. The battery pack includes the battery pack thermal runaway flue gas treatment system in any one of above Embodiment 1 to Embodiment 4. The flue gas treatment system may rapidly discharge a combustible gas produced after the runaway of the battery pack to the atmosphere, so as to prevent forming a flash explosion environment due to accumulation of the combustible gas. The ignition device 8 may further ignite the combustible gas to eliminate safety hazards. The exhaust fan 5 may disperse the combustible gas into the atmosphere, and the reflux device 9 may cause the electrolyte to flow back after the thermal runaway of the battery 1.

## Claims

1. A battery pack thermal runaway flue gas treatment system, wherein a battery pack comprises at least one battery, and wherein the battery pack thermal runaway flue gas treatment system comprises a thermal runaway flue gas treatment assembly, and the battery pack is disposed within a box body;
the thermal runaway flue gas treatment assembly comprises an exhaust pipe and at least one pressure relief pipe;
one end of each pressure relief pipe of the least one pressure relief pipe communicates with an explosion vent of the battery, and the other end of the each pressure relief pipe is connected with the exhaust pipe; and
one end of the exhaust pipe that is disposed within the box body is connected with the each pressure relief pipe, the other end of the exhaust pipe is disposed at a top end of the box body by passing through the box body, and a height of the exhaust pipe disposed outside the box body is H, H being greater than or equal to 3 m.

2. The battery pack thermal runaway flue gas treatment system as claimed in claim 1, wherein the height H of the exhaust pipe outside the box body is greater than 9 m.

3. The battery pack thermal runaway flue gas treatment system as claimed in claim 2, wherein the height H of the exhaust pipe outside the box body is greater than 12 m.

4. The battery pack thermal runaway flue gas treatment system as claimed in claim 1, wherein an exhaust fan is disposed within the exhaust pipe and is configured to rapidly discharge thermal runaway flue gas, or the exhaust fan extends to a top end of the exhaust pipe and is configured to blow away the discharged thermal runaway flue gas.

5. The battery pack thermal runaway flue gas treatment system as claimed in claim 1, wherein a rain cover is disposed at a top end of the exhaust pipe, and is configured to prevent rainwater from entering the exhaust pipe.

6. The battery pack thermal runaway flue gas treatment system as claimed in claim 1, wherein a non-return valve is disposed on the exhaust pipe, and is configured to prevent rainwater from entering the battery through the exhaust pipe.

7. The battery pack thermal runaway flue gas treatment system as claimed in claim 1, wherein an ignition device is disposed at a top end of the exhaust pipe and is configured to ignite thermal runaway flue gas discharged from the exhaust pipe, and a flame arrester is disposed on the exhaust pipe.

8. The battery pack thermal runaway flue gas treatment system as claimed in any one of claims 1 to 7, wherein a reflux device is disposed at a bottom end of the exhaust pipe, and is configured to collect electrolyte from thermal runaway flue gas.

9. The battery pack thermal runaway flue gas treatment system as claimed in claim 8, wherein a mounting height of the reflux device is lower than a mounting height of the each pressure relief pipe.

10. A battery pack, comprising the battery pack thermal runaway flue gas treatment system as claimed in any one of claims 1 to 9.
